# EUROPEAN PATENT SPECIFICATION

(11) **EP 4 181 293 B1**
(45) Date of publication and mention of the grant of the patent: **09.09.2026**
(21) Application number: 22736873.5
(22) Date of filing: 07.01.2022
(51) Int. Cl.: H01M 50/242, H01M 50/569, H01M 50/178, H01M 10/6551, H01M 10/653, H01M 10/647, H01M 10/613, H01M 10/625, H01M 10/6554, H01M 10/6555, H01M 50/209, H01M 50/211, H01M 50/224, H01M 50/296

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 11.01.2021 KR 20210003189
(43) Date of publication of application: 17.05.2023
(73) Proprietor: LG Energy Solution, Ltd., Seoul 07335 (KR)
(72) Inventor: HAN, Honggoo, Daejeon 34122 (KR); SEONG, Junyeob, Daejeon 34122 (KR); PARK, Won Kyoung, Daejeon 34122 (KR); PARK, Subin, Daejeon 34122 (KR)
(74) Representative: Goddar, Heinz J.
(86) International application number: PCT/KR2022/000273
(87) International publication number: WO 2022/149896

(56) References cited:
- CN-A- 109 428 026
- JP-A- 2010 244 894
- KR-A- 20160 146 587
- KR-A- 20210 000 551
- KR-A- 20210 000 551
- KR-B1- 102 032 356
- US-A1- 2006 093 890

## Description

### [TECHNICAL FIELD]

### Cross Citation with Related Application(s)

This application claims the benefit of Korean Patent Application No. 10-2021-0003189 filed on January 11, 2021 with the Korean Intellectual Property Office.

The present disclosure relates to a battery module and a battery pack including the same, and more particularly, to a battery module having improved cooling performance, and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for development of the secondary battery.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate, each being coated with the positive electrode active material and the negative electrode active material, are arranged with a separator being interposed between them, and a battery case which seals and houses the electrode assembly together with an electrolyte solution.

Generally, the lithium secondary battery may be classified based on the shape of the exterior material into a can type secondary battery in which the electrode assembly is built into a metal can, and a pouch-type secondary battery in which the electrode assembly is built into a pouch of an aluminum laminate sheet.

In the case of a secondary battery used for small-sized devices, two to three battery cells are arranged, but in the case of a secondary battery used for a middle or large-sized device such as an automobile, a battery module in which a large number of battery cells are electrically connected is used. In such a battery module, a large number of battery cells are connected to each other in series or parallel to form a cell assembly, thereby improving capacity and output. One or more battery modules can be mounted together with various control and protection systems such as a BDU (Battery Disconnect Unit), a BMS (Battery Management System) and a cooling system to form a battery pack.

A battery pack must satisfy various functions. First, it must satisfy structural durability against various environments, vibrations, and impacts. Second, HV (high voltage) connection for electrical connection and LV (low voltage) connection to which sensors for diagnosing the internal state of the battery module are connected are required. Finally, the battery cells inside the battery pack generate electrical energy and dissipate heat, and a cooling system is essential to cool it.

In relation to the cooling system, when the temperature of the secondary battery rises higher than an appropriate temperature, the performance of the secondary battery may be deteriorated, and in the worst case, there is also a risk of an explosion or ignition. In particular, a large number of secondary batteries, that is, a battery module or a battery pack having battery cells, can add up the heat generated from the large number of battery cells in a narrow space, so that the temperature can rise more quickly and excessively. In other words, a battery module in which a large number of battery cells are stacked, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases. Moreover, in the case of a middle- or large-sized battery module included in a vehicle battery pack, it is frequently exposed to direct sunlight and may be placed under high-temperature conditions such as summer or desert areas.

CN 109 428 026 A describes a battery module capable of reducing an assembly process, improving an assembly efficiency and improving an overall rigidity of the battery module. The battery module encloses a secondary battery using a metal frame and a pair of end separators.

KR 10 2021 0000 551 A describes a battery pack having increased capacity and output as well as cooling performance. The battery pack encloses a cell stack using a metal frame and a pair of end plates.

### [DETAILED DESCRIPTION OF THE INVENTION]

### [Technical Problem]

It is an object of the present disclosure to provide a battery module with a novel structure that is improved in cooling performance and heat transfer performance and is provided with a sensing block that can guide HV (High voltage) connection and LV (Low voltage) connection, and a battery pack including the same.

### [Technical Solution]

According to one embodiment of the present disclosure, there is provided a battery module comprising: a battery cell stack in which a plurality of battery cells including electrode leads are stacked; a first sensing block and a second sensing block that cover the front surface and the rear surface of the battery cell stack from which the electrode leads protrude; and an elastic member that covers both side surfaces of the first sensing block, the second sensing block, and the battery cell stack, wherein each of the first sensing block and the second sensing block includes an outer protrusion part that protrudes in a direction opposite to a direction in which the battery cell stack is located.

The elastic member surrounds the outer protrusion parts of the first sensing block and the outer protrusion parts of the second sensing block.

The first sensing block includes first outer protrusion parts protruding from both ends of the first sensing block in a direction opposite to a direction in which the battery cell stack is located, and the second sensing block includes second outer protrusions parts protruding from both ends of the second sensing block in a direction opposite to a direction in which the battery cell stack is located.

The elastic member continues while surrounding the first outer protrusion parts and the second outer protrusion parts.

The elastic member is continuously connected along the first sensing block, the second sensing block, and both side surfaces of the battery cell stack.

The upper surface and the lower surface of the battery cell stack are exposed.

The electrode lead may include a first electrode lead and a second electrode lead that protrude in mutually opposite directions from the battery cell.

On the front surface and the rear surface of the battery cell stack, at least two of the electrode leads may be connected to each other to form an electrode lead joined body.

A low voltage (LV) sensing assembly may be located in at least one of the first sensing block and the second sensing block, and the LV sensing assembly may be connected to the electrode lead joined body.

A slit may be formed in the first sensing block and the second sensing block, and the electrode leads pass through the slit and may be bent to form the electrode lead joined body.

Due to the outer protrusion parts, the elastic member may be spaced apart from the electrode lead joined body.

The battery module may further include a cooling fin located between the battery cells. At least one of the first sensing block and the second sensing block may include an inner protrusion part that protrudes in a direction in which the battery cell stack is located. The cooling fin may make contact with the inner protrusion part.

The sum of the protrusion length of the inner protrusion part and the length of the cooling fin in contact with the inner protrusion part may be equal to or greater than the length of the cell body of the battery cell.

According to one embodiment of the present disclosure, there is provided a battery pack comprising: the battery module; a pack frame that houses the battery module; and a thermal conductive resin layer that is located between the battery module and the bottom part of the pack frame. The elastic member is opened in its lower part, so that the lower surface of the battery cell stack is exposed.

The lower surface of the battery cell stack may make contact with the thermal conductive resin layer.

### [Advantageous Effects]

According to embodiments of the present disclosure, the heat transfer path can be simplified by the structure exposing the lower surface of the battery cell stack, thereby improving the cooling performance.

In addition, by forming a structure the elastic member continues continuously while surrounding the battery cell stack, swelling of the battery cells can be suppressed, and deformation of the battery module in the stacking direction of the battery cells can be prevented.

Further, a sensing block capable of guiding a high voltage (HV) connection and a low voltage (LV) connection and protecting the battery cell can be fixed by the elastic member.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view which shows a battery module according to an embodiment of the present disclosure;
Fig. 2 is an exploded perspective view of the battery module of Fig. 1;
Fig. 3 is a perspective view which shows a battery cell included in the battery module of Fig. 2;
Fig. 4 is a partial perspective view which enlarges and shows a front section of the battery module of Fig. 1;
Fig. 5 is a view of the front section of the battery module of Fig. 4 as viewed from the front;
Fig. 6 is a perspective view of a cross section taken along the cutting line A-A' of Fig. 1;
Fig. 7 is a perspective view which shows a state in which an elastic member is removed from the battery module of Fig. 1;
Fig. 8 is a cross-sectional view that shows a cross section taken along the cutting line B-B' of Fig. 7;
Fig. 9 is a perspective view which shows a battery pack according to an embodiment of the present disclosure; and
Fig. 10 is a cross-sectional view which shows a cross section taken along the cutting line C-C' of Fig. 9.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

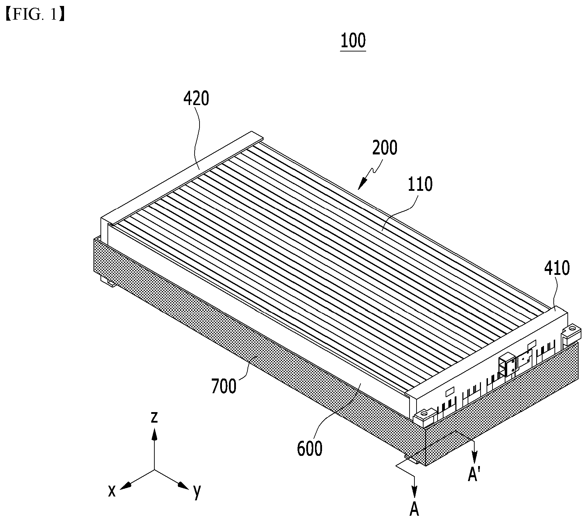

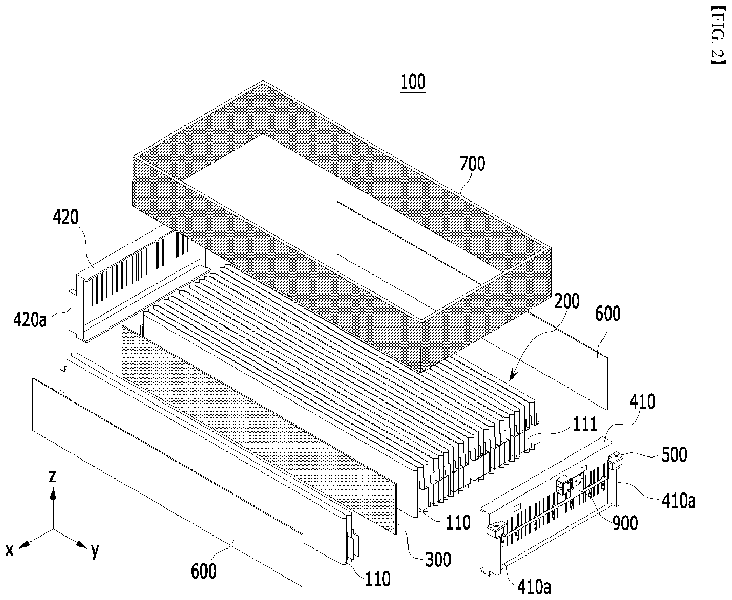

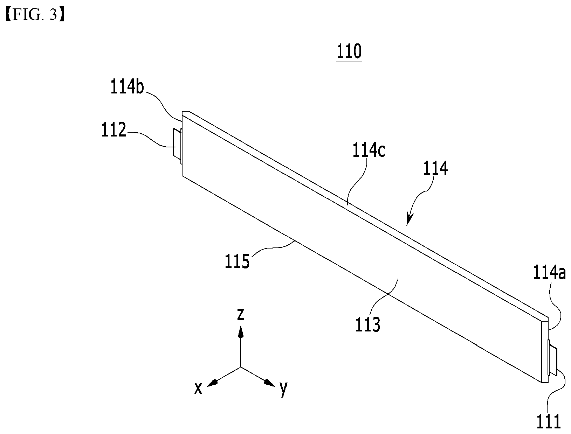

Fig. 1 is a perspective view which shows a battery module according to an embodiment of the present disclosure. Fig. 2 is an exploded perspective view of the battery module of Fig. 1. Fig. 3 is a perspective view which shows a battery cell included in the battery module of Fig. 2.

Referring to Figs. 1 to 3, the battery module 100 according to an embodiment of the present disclosure includes a battery cell stack 200 in which a plurality of battery cells 110 including electrode leads 111 and 112 are stacked; a first sensing block 410 and a second sensing block 420 that cover the front surface and the rear surface of the battery cell stack 200 from which the electrode leads 111 and 112 protrude, respectively; and an elastic member 700 that covers both side surfaces of the first sensing block 410, the second sensing block 420, and the battery cell stack 200. Here, the front surface means a surface of the battery cell stack 200 in the y-axis direction, the rear surface means a surface of the battery cell stack 200 in the -y-axis direction, and both side surfaces mean surfaces of the battery cell stack 200 in the x-axis and -x-axis directions, respectively. Further, the lower surface means a surface of the battery cell stack 200 in the -z-axis direction, the upper surface means a surface of the battery cell stack 200 in the z-axis direction. However, these are surfaces mentioned for convenience of explanation, and may vary depending on the position of a target object or the position of an observer. As described above, the front surface and the rear surface of the battery cell stack 200 may be surfaces on which the protruded electrode leads 111 and 112 of the battery cells 110 are located.

First, the battery cell 110 is preferably a pouch-type battery cell, and can be formed in a rectangular sheet-like structure. The battery cell 110 according to the present embodiment includes protruding first and second electrode leads 111 and 112. Specifically, the battery cell 110 according to the present embodiment has a structure in which first and second electrode leads 111 and 112 face each other with respect to the cell main body 113 and protrude from one end part 114a and the other end part 114b, respectively. More specifically, the first and second electrode leads 111 and 112 are connected to an electrode assembly (not shown), and are protruded from the electrode assembly (not shown) to the outside of the battery cell 110. The first and second electrode leads 111 and 112 have different polarities from each other, and as an example, one of them may be a cathode lead 111, and the other one may be the anode lead 112. That is, the cathode lead 111 and the anode lead 112 may protrude in mutually opposite directions with respect to one battery cell 110.

Meanwhile, the battery cell 110 can be produced by joining both end parts 114a and 114b of a cell case 114 and one side part 114c connecting them in a state in which an electrode assembly (not shown) is housed in a cell case 114. In other words, the battery cell 110 according to the present embodiment has a total of three sealing parts, wherein the sealing parts have a structure that is sealed by a method such as heat-sealing, and the remaining other side part may be composed of a connection part 115. The cell case 114 may be composed of a laminated sheet including a resin layer and a metal layer.

The battery cell 110 may be configured in plural numbers, and the plurality of battery cells 110 can be stacked so as to be electrically connected to each other, thereby forming a battery cell stack 200. Particularly, as shown in Figs. 1 and 2, the plurality of battery cells 110 can be stacked along a direction parallel to the x-axis. Thereby, the first electrode lead 111 and the second electrode lead 112 may be protruded toward the y-axis direction and the -y-axis direction, respectively. That is, the first electrode lead 111 and the second electrode lead 112 may be located on the front surface and the rear surface of the battery cell stack 200.

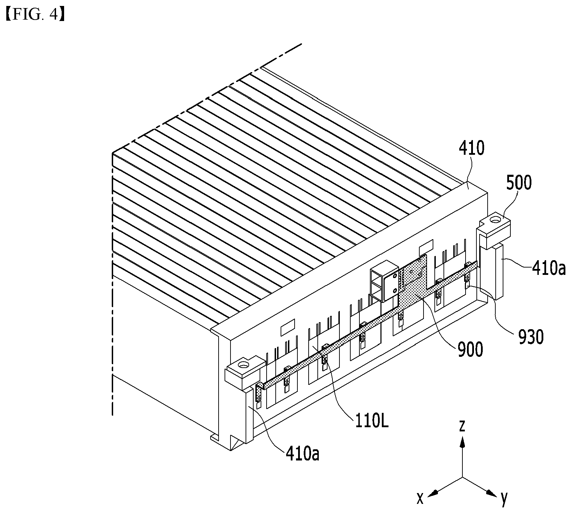

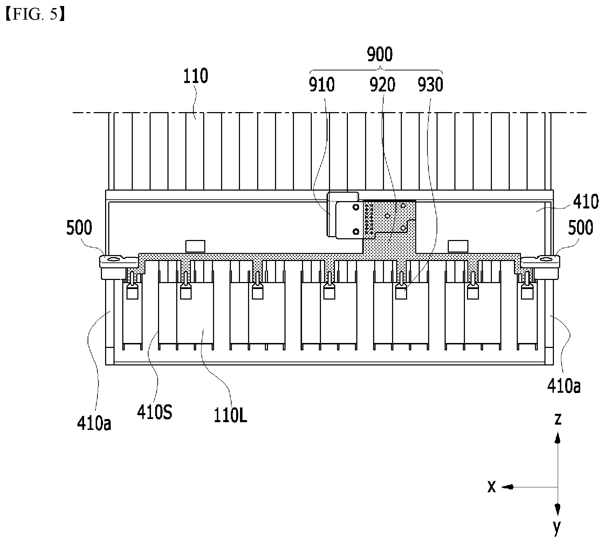

Next, the first sensing block and the second sensing block according to the present embodiment will be described in detail with reference to Figs. 4 and 5, and the like.

Fig. 4 is a partial perspective view which enlarges and shows a front section of the battery module of Fig. 1. Fig. 5 is a view of the front section of the battery module of Fig. 4 as viewed from the front. However, Figs. 4 and 5 show the state in which the elastic member 700 of Fig. 4 is omitted from the battery module of Fig. 1 for convenience of explanation.

Referring to Figs. 2 to 5 together, the first sensing block 410 and the second sensing block 420 cover the front surface and the rear surface of the battery cell stack 200 in which the electrode leads 111 and 112 protrude, respectively. More specifically, the first sensing block 410 may be located between the front surface of the battery cell stack 200 and the elastic member 700, and the second sensing block 420 may be located between the rear surface of the battery cell stack 200 and the elastic member 700. The elastic member 700 will be described later.

The first sensing block 410 and the second sensing block 420 may include a material having electrical insulation, and as an example, it may include a plastic material, a polymer material, or a composite material. Further, the first sensing block 410 and the second sensing block 420 may have a kind of basket shape, and can be configured so as to cover the front surface and the rear surface of the battery cell stack 200, respectively.

In the following, in order to avoid repetition of the description, the first sensing block 410 shown in Figs. 4 and 5 will be mainly described, but the same or similar structure can be applied to the second sensing block 420.

As described above, electrode leads 111 and 112 may be located on the front surface and the rear surface of the battery cell stack 200. A slit 410S may be formed in the first sensing block 410, and when the first sensing block 410 is arranged, the electrode leads 111 and 112 can pass through the slit 410S. Next, at least two electrode leads 111 and 112 may be bent and joined to form an electrode lead joined body 110L. Specifically, the electrode leads 111 and 112 protruding in the same direction with respect to the adjacent battery cells 110 are bent in a direction perpendicular to the protruding direction of the electrode leads 111 and 112, and are joined to each other to form an electrode lead joined body 110L. Thereby, one surface of the electrode lead joined body 110L may be perpendicular to a direction (y-axis direction) in which the electrode leads 111 and 112 protrude from the battery cell 110. In this case, electrode leads having the same polarity may be joined to each other, or electrode leads having different polarities may be joined to each other. In other words, in order to realize a parallel connection between the battery cells 110, electrode leads having the same polarity may be joined to each other, and in order to realize a series connection between the battery cells 110, electrode leads having different polarities may be joined to each other. This can vary depending on the design of the battery module.

Meanwhile, the electrode leads 111 and 112 of the battery cells 110 located outside the battery cell stack 200 may be connected to the terminal busbar 500. Unlike the conventional battery module in which the electrode leads are connected to each other via a busbar, the electrode leads 111 and 112 according to the present embodiment are directly joined to each other, and a part thereof can be connected to the terminal busbar 500 to form a HV (high voltage) connection. Here, the HV connection is a connection that serves as a power source for supplying power, and means a connection between battery cells or a connection between battery modules. Unlike a conventional battery module in which the electrode leads are connected to each other via a busbar, the electrode leads 111 and 112 according to the present embodiment are directly joined to each other, and a part of them are connected to the terminal busbar 500, so that HV connection can be formed. Therefore, in the HV connection structure according to the present embodiment, the busbar and the busbar frame to which the busbar is mounted can be removed.

Meanwhile, the battery module 100 according to the present embodiment may include a low voltage (LV) sensing assembly 900 for transmitting voltage information of a battery cell. The LV sensing assembly 900 may be located in at least one of the first sensing block 410 and the second sensing block 420. Specifically, the LV sensing assembly 900 can be located on the opposite side of a surface facing the battery cell stack 200 among the first sensing block 410. Similarly, although not specifically shown in the figure, in some cases, the LV sensing assembly 900 can be located on the opposite side of a surface facing the battery cell stack 200 among the second sensing block 420.

The LV sensing assembly 900 is for a low voltage (LV) connection, wherein the LV connection means a sensing connection for sensing and controlling a voltage or the like of a battery cell. Voltage information and temperature information of the battery cell 110 can be transmitted to an external BMS (Battery Management System) via the LV sensing assembly 900. Such LV sensing assembly 900 can be connected to the electrode lead joined body 110L.

The LV sensing assembly 900 may include an LV connector 910, a connection member 920 for connecting the LV connector 910 and the electrode leads 111 and 112, and a joining plate 930 located at one end of the connection member 920 and joined to the electrode leads 111 and 112.

The LV connector 910 can be configured so as to transmit and receive signals to and from an external control device to control the plurality of battery cells 110. The connection member 920 may be a flexible printed circuit board (FPCB) or a flexible flat cable (FFC). Voltage and temperature information measured from the plurality of battery cells 110 may be transmitted to an external BMS (battery management system) via the connection member 920 and the LV connector 910. That is, the LV sensing assembly 900 including the LV connector 910 and the connection member 920 can detect and control phenomena such as overvoltage, overcurrent, and overheating of each battery cell 110. The joining plate 930 is located at one end of the connection member 920 and may be made of a metal material having electrical conductivity. By joining such a joining plate 930 to the electrode leads 111 and 112, the connection member 920 and the electrode lead 111 can be electrically and physically connected. Specifically, one side of the joining plate 930 passes through the connection member 920 and is then bent to thereby be coupled with the connection member 920, and the other side of the joining plate 930 can be formed in a plate shape to be joined, particularly weld-joined, to the electrode leads 111 and 112.

Meanwhile, as described above, the battery cells 110 may be stacked along the x-axis direction to form the battery cell stack 200, whereby the electrode leads 111 and 112 may protrude in the y-axis direction and the -y-axis direction, respectively. At this time, as described above, at least two electrode leads 111 and 112 may be bent and joined to form the electrode lead joined body 110L. The joining plate 930 of the LV sensing assembly 900 can be directly joined to the electrode lead joined body 110L, so that the LV sensing assembly 900 and the electrode leads 111 and 112 can be connected to each other. The battery module 100 according to the present embodiment has the advantage that the HV connection and the LV connection are not performed individually, but can be performed at once and thus, the productivity improvement can be expected, and that the configuration of the busbar frame and the like can be removed and thus, the battery module 100 of a more compact configuration can be manufactured.

The first sensing block 410 and the second sensing block 420 according to the present embodiment can guide the HV connection and LV connection of the battery module 100, and at the same time, have a predetermined strength, and therefore, can play a role of protecting the battery cells 110.

In the joining between the electrode leads 111 and 112 for forming the electrode lead joined body 110L or the joining between the electrode lead joined body 110L and the joining plate 930, the joining method thereof is not particularly limited as long as electrical connection is possible, and as an example, the weld-joining can be performed. Further, the electrode leads 111 and 112 protruding in the y-axis direction are mainly described, but with respect to for the electrode leads 111 and 112 protruding in the -y axis direction, the structure of the electrode lead joined body and the LV sensing assembly 900 can be formed similarly.

Meanwhile, as shown in Figs. 1 and 2, the elastic member 700 according to the present embodiment can cover the electrode leads 111 and 112, that is, the electrode lead joined body 110L. Structurally, the electrode lead joined body 110L is located outside the first sensing block 410 or the second sensing block 420. The elastic member 700 covers the electrode lead joined body 110L, so that the electrode lead joined body 110L can be protected from the external environment.

Next, the elastic member 700 will be described in detail.

Referring back to Figs. 1 and 2, the elastic member 700 according to the present embodiment is continuously connected along the front surface, the rear surface, and both side surfaces of the battery cell stack 200. More specifically, the elastic member 700 is continuously connected along the first sensing block 410, the second sensing block 420, and both side surfaces of the battery cell stack 200. In the process of repeatedly charging and discharging a plurality of battery cells 110, a phenomenon in which the internal electrolyte decomposes to generate gas and the battery cell 110 swells, that is, a swelling phenomenon, may occur. In particular, each battery cell 110 may cause swelling in the stacking direction of the battery cells 110 (direction parallel to the x-axis). In the present embodiment, since the elastic member 700 having elasticity is continuously connected along the front surface, the rear surface and the both side surfaces of the battery cell stack 200, swelling of the battery cells 110 can be suppressed, and deformation of the battery module 100 in the stacking direction of the battery cells 110 can be minimized.

The battery module according to the present embodiment can form a module-less structure in which the module frame and the end plate are removed. The battery module 100 can maintain and fix its shape by the elastic member 700 instead of the module frame or the end plate. Particularly, the first sensing block 410, the battery cell stack 200, and the second sensing block 420 may be fixed together by the elastic member 700. As the module frame and end plate are removed, complicated processes that require precise control, such as a process of housing the battery cell stack 200 in the module frame or a process of assembling the module frame and the end plate, are unnecessary. Additionally, it has the advantage that the weight of the battery module 100 can be greatly reduced by the removed module frame and end plate. Further, the battery module 100 according to the present embodiment has the advantage that as the module frame is removed, it is easy to rework during the battery pack assembly process, but this can be distinguished from a conventional battery module having a module frame in which it is not possible to rework even if a defect occurs in the welding structure of the module frame.

Further, the upper part and the lower part of the elastic member 700 are opened and thus, se the upper surface and the lower surface of the battery cell stack 200 are exposed to the outside. However, because it is more effective for heat dissipation than being surrounded by the module frame, the cooling performance can be improved. Here, the upper surface means a surface of the battery cell stack 200 in the z-axis direction, and the lower surface means a surface of the battery cell stack 200 in the -z-axis direction.

Meanwhile, the material of such an elastic member 700 is not particularly limited as long as it has a predetermined elastic force, and as an example, it may include at least one of a polymer composite material, a composite material such as fiber-reinforced plastic (FRB), and a metal alloy.

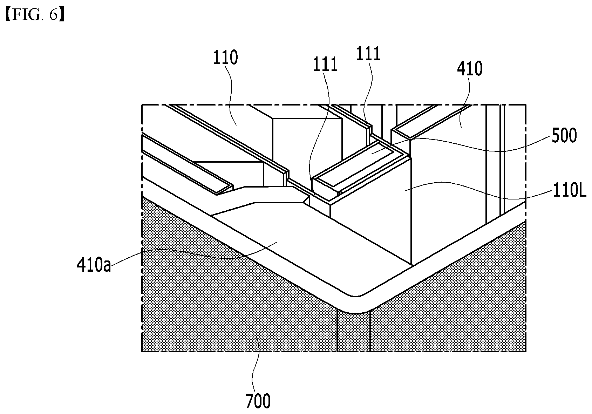

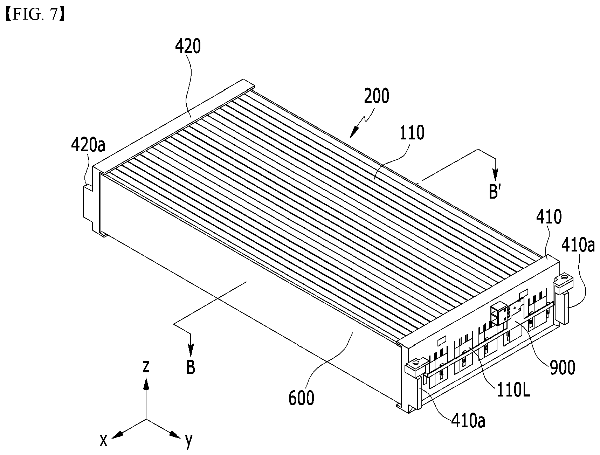

Next, the outer protrusion parts according to the present embodiment will be described in detail with reference to Figs. 6 and 7, and the like. Fig. 6 is a perspective view of a cross section taken along the cutting line A-A' of Fig. 1. Fig. 7 is a perspective view which shows a state in which an elastic member is removed from the battery module of Fig. 1.

Referring to Figs. 2 and 5 to 7, each of the first sensing block 410 and the second sensing block 420 according to the present embodiment includes outer protrusion parts 410a and 420a protruding in a direction opposite to the direction in which the battery cell stack 200 is located. The elastic member 700 may be continuously connected along the first sensing block 410, the second sensing block 420, and both side surfaces of the battery cell stack 200, while surrounding the outer protrusion parts 410a of the first sensing block 410 and the outer protrusion parts 420a of the second sensing block 420.

The first sensing block 410 may include first outer protrusion parts 410a protruding from both ends of the first sensing block 410 in a direction opposite to the direction in which the battery cell stack 200 is located. The both ends mean both ends in the width direction, not both ends in the height direction. In Fig. 7, a direction opposite to the direction in which the battery cell stack 200 is located with respect to the first sensing block 410 means the y-axis direction.

Meanwhile, the second sensing block 420 may include second outer protrusion parts 420a protruding from both ends of the second sensing block 420 in a direction opposite to the direction in which the battery cell stack 200 is located. Although only one second outer protrusion part 420a is shown in Fig. 7, two second outer protrusion parts 420a may be respectively located at both ends of the second sensing block 420, similarly to the first outer protrusion part 410a. The both ends mean both ends in the width direction, not both ends in the height direction. In Fig. 7, a direction opposite to the direction in which the battery cell stack 200 is located with respect to the second sensing block 420 means the -y-axis direction.

The first outer protrusion parts 410a and the second outer protrusion parts 420a protrude in mutually opposite directions.

That is, in the battery module 100 according to the present embodiment, the elastic member 700 may continuously connected along the first sensing block 410, the second sensing block 420, and both sides of the battery cell stack 200 while surrounding the first outer protrusion parts 410a and the second outer protrusion parts 420a. Particularly, when the first outer protrusion parts 410a and the second outer protrusion parts 420a are located at both ends of the first sensing block 410 and the second sensing block 420, respectively, the elastic member 700 can be tightly pulled by the outer protrusion parts 410a and 420a formed at the four corners of the battery module 100. Thereby, as shown in Fig. 6, due to the outer protrusion parts 410a and 420a, the elastic member 700 may be spaced apart from the electrode lead assembly 110L by a predetermined interval.

As described above, since the elastic member 700 covers the electrode lead joined body 110L, it is possible to protect the electrode lead joined body 10L from the external environment. However, the elastic force and pressing force of the elastic member 700 may rather damage the electrode lead joined body 110L by the elastic member 700. Therefore, the first sensing block 410 and the second sensing block 420 are provided with outer protrusion parts 410a and 420a protruding in a direction opposite to the direction in which the battery cell stack 200 is located, whereby an attempt was made to prevent the elastic member 700 from directly contacting the electrode leads 111 and 112, that is, the electrode lead joined body 110L. That is, it is possible to prevent damage to the electrode lead assembly 110L by setting the elastic member 700 so as to be spaced apart at predetermined intervals while covering the electrode lead joined body 110L.

Next, the cooling fins and the inner protrusion part according to the present embodiment will be described in detail.

Referring to Fig. 2 again, the battery module 100 according to the present embodiment may further include a cooling fin 300 located between the battery cells 110. Although only one cooling fin 300 is illustrated in Fig. 2, the cooling fins 300 according to the present embodiment may be all located between the respective battery cells 110, or the cooling fins 300 may be disposed one by one therebetween at an interval of the two battery cells 110.

The cooling fin 300 may include a metal material having high thermal conductivity. The specific material is not limited, and as an example, it may include aluminum (Al). Cooling fins 300 having high thermal conductivity may be arranged between the battery cells 110 and directly attached to widen the cooling area. Thereby, the cooling performance is improved.

Meanwhile, as described above, the lower part of the elastic member 700 is opened and thus, the lower surface of the battery cell stack 200 is exposed to the outside, wherein the cooling fins 300 according to the present embodiment may protrude from the lower surface of the battery cell stack 200. Thereby, the cooling fins 300 according to the present embodiment may come into direct contact with a thermal conductive resin layer described later. The cooling fin 300 arranged between the battery cells 110 comes into direct contact with the thermal conductive resin layer, so that the heat discharge performance of the battery module can be maximized.

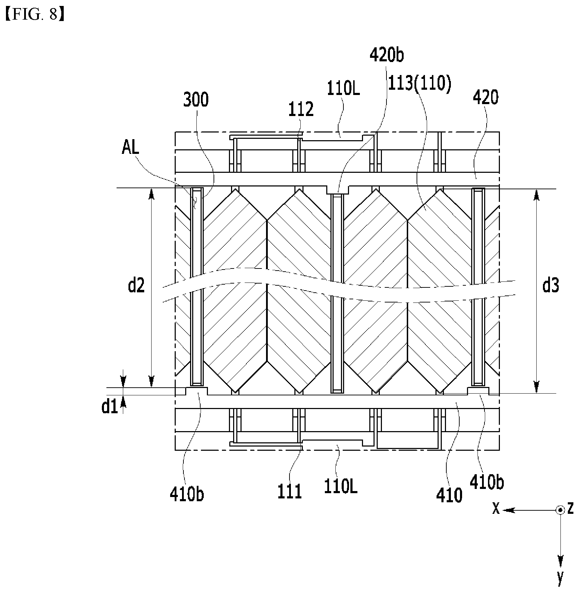

Fig. 8 is a cross-sectional view that shows a cross section taken along the cutting line B-B' of Fig. 7. Particularly, in Fig. 8, the illustration of the middle portion is omitted in order to show the first sensing block 410 and the second sensing block 420.

Referring to Figs. 2, 7 and 8, at least one of the first sensing block 410 and the second sensing block 420 according to the present embodiment may include inner projection parts 410b and 420b projecting in the direction in which the battery cell stack 200 is located. The cooling fin 300 may make contact with the inner protrusion parts 410b and 420b.

The first sensing block 410 may include a first inner protrusion part 410b protruding in a direction in which the battery cell stack 200 is located. In Figs. 7 and 8, the direction in which the battery cell stack 200 is positioned with respect to the first sensing block 410 means the -y-axis direction.

Meanwhile, the second sensing block 420 may include a second inner protrusion part 420b protruding in a direction in which the battery cell stack 200 is located. In Figs. 7 and 8, the direction in which the battery cell stack 200 is located with respect to the second sensing block 420 means the y-axis direction.

The first inner protrusion part 410b and the second inner protrusion part 420b protrude in a direction in which they are located to each other.

At this time, the sum of the protrusion length d1 of the first inner protrusion part 410b and the length d2 of the cooling fin 300 in contact with the first inner protrusion part 410b may be equal to or greater than the length d3 of the cell body 113 of the battery cell 110. The protrusion length d1 of the first inner protrusion part 410b means a length at which the first inner protrusion part 410b protrudes from the first sensing block 410. Similarly, although not specifically indicated, the sum of the protrusion length of the second inner protrusion part 420b and the length of the cooling fin 300 in contact with the second inner protrusion part 420b may be equal to or greater than the length d3 of the cell body 113 of the battery cell 110.

In the battery module 100 according to the present embodiment, due to the elastic force of the elastic member 700, pressure can be applied to the first sensing block 410 and the second sensing block 420 in a direction in which they are located to each other. When such a pressure is excessive, damage may be applied to the battery cells 110 located between the first sensing block 410 and the second sensing block 420. The inner protrusion parts 410b and 420b protruding in the direction in which the battery cell stack 200 is located is provided in at least one of the first sensing block 410 and the second sensing block 420, which is configured so as to make contact with the cooling fins 300, thereby attempting to secure the area of the battery cell 110 and prevent damage to the battery cell 110. In other words, the cooling fins 300 and the inner protrusion parts 410b and 420b are configured so as to support the first sensing block 410 and the second sensing block 420 on which the elastic force acts from the elastic member 700, thereby being able to set the limit of contraction of the elastic member 700 and secure a space in which the battery cells 110 can be located without damage. The cooling fins 300 are designed so as to perform not only a cooling function but also a supporting function.

Meanwhile, the cooling fin 300 according to the present embodiment may be a metal plate material having an air layer AL formed therein, as shown in Fig. 8. As an example, it may be a structure in which a metal plate material such as aluminum (Al) forms a two-layer structure and an air layer (AL) is formed between them. Such an air layer AL can function as a heat insulating layer. Even if a fire occurs in any one of the battery cells 110 due to heat generation, the propagation of fire or heat to the adjacent battery cells 110 can be delayed due to the air layer AL provided between the battery cells 110. That is, it is possible to secure a time for the fire to propagate to the peripheral battery cells 110 and thus improve the safety of the battery module 100.

Further, since the cooling fin 300 according to the present embodiment is a metal plate material having a two-layer structure, an elastic restoring force is easily acted on the swelling of the battery cell 110. Due to this elastic restoring force, when the battery cell 110 swells, the pressure transferred to the battery cell 110 located on the opposite side can be reduced. That is, it is easier to control swelling.

Meanwhile, referring to Figs. 1 and 2 again, the battery module 100 according to the present embodiment may further include a plate-shaped side surface pad 600 located between the both side surfaces of the battery cell stack 200 and the elastic member 700. Instead of removing the module frame and the end plate, side surface pads 600 are arranged on both sides of the battery cell stack 200 to supplement the stiffness of the battery module 100. The side surface pad 600 may supplement the stiffness of the battery module 100 and perform a buffering function between the battery cell 110 and the elastic member 700. A pad made of a foam material may be applied to the side surface pad 600.

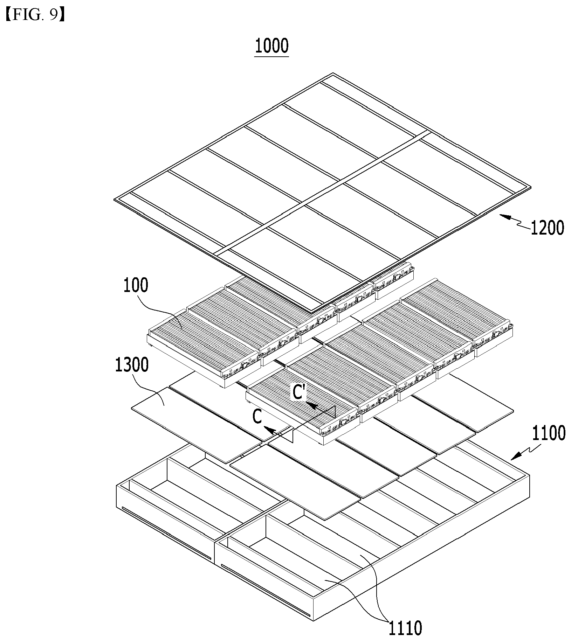

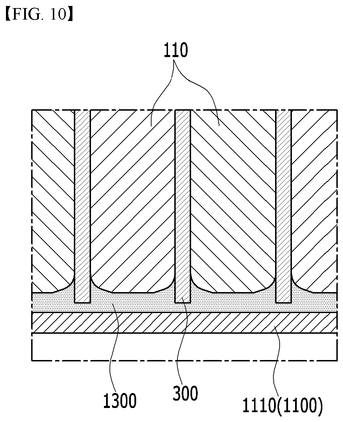

Next, a battery pack according to an embodiment of the present disclosure will be described in detail with reference to Figs. 9 and 10.

Fig. 9 is a perspective view which shows a battery pack according to an embodiment of the present disclosure. Fig. 10 is a cross-sectional view which shows a cross section taken along the cutting line C-C' of Fig. 9. Wherein, Fig. 10 shows a cross section thereof, assuming that the battery module 100, the thermal conductive resin layer 1300 and the bottom part 1110 of the pack frame 1100 in Fig. 9 are in a state of being in contact with each other, unlike those shown in Fig. 9.

Referring to Figs. 9 and 10, the battery pack 1000 according to an embodiment of the present disclosure may include a battery module 100, a pack frame 1100 for housing the battery module 100, and a thermal conductive resin layer 1300 located between the battery module 100 and the bottom part 1110 of the pack frame 1100.

The battery module 100 includes a battery cell stack 200, a first sensing block 410, a second sensing block 420, and an elastic member 700 as described above. Since the details of the battery module 100 overlaps with the contents described above, a further description will be omitted.

The battery pack 1000 may further include an upper cover 1200 for covering the pack frame 1100. That is, a plurality of battery modules 100 may be housed between the pack frame 1100 and the upper cover 1200.

The thermal conductive resin layer 1300 can be formed by applying a thermal conductive resin onto the bottom part 1110. Specifically, the thermal conductive resin is applied onto the bottom part 1110, the battery module 100 according to the present embodiment is located thereon, and then the thermal conductive resin is cured to form the thermal conductive resin layer 1300.

The thermal conductive resin may include a thermal conductive adhesive material, and specifically, may include at least one of a silicone material, a urethane material, and an acrylic material. The thermal conductive resin is a liquid during application but is cured after application, so that it can perform the role of fixing a plurality of battery cells 110 constituting the battery cell stack 200. Further, since the thermal conductive resin has excellent heat transfer properties, it is possible to quickly transfer the heat generated in the battery module 100 to the bottom part 1110 and thus prevent the battery pack 1000 from overheating.

Referring to Figs. 2, 9 and 10, as described above, the battery module 100 according to the present embodiment may form a module-less structure in which the module frame and the end plate are removed, and the lower part of the elastic member 700 is opened so that a lower part of the battery cell stack 200 is exposed. In the battery pack 1000, the lower surface of the battery cell stack 200 makes contact with the thermal conductive resin layer 1300. Thus, the heat generated in the battery cell 110 may be immediately transferred to the bottom part 1110 of the pack frame 1100 via the thermal conductive resin layer 1300. In the case of conventional battery module having a module frame, since the heat generated from the battery cell is discharged to the outside of the battery module through several layers, the heat transfer path is complicated. That is, it is difficult to effectively transfer the heat generated from the battery cell, and a fine air layer, such as an air gap, that may be formed between the layers may interfere with heat transfer. Unlike the same, since the battery cell 110 according to the present embodiment comes into direct contact with the thermal conductive resin layer 1300 as shown in Fig. 10, the heat transfer path in the lower direction of the battery module 100 may be simplified, and the possibility of generating an air layer such as an air gap can be reduced. Therefore, it is possible to increase the cooling performance of the battery module 100 and the battery pack 1000 including the same.

Further, the cooling fin 300 according to the present embodiment is extended from the lower surface of the battery cell stack 200 to make contact with the thermal conductive resin layer 1300. Since the lower surface of the battery cell stack 200 is exposed, the cooling fin 300 located between the battery cells 110 can come into direct contact with the thermal conductive resin layer 1300 on the bottom part 1110. By configuring the cooling fins 300 facing the battery cells 110 so as to be in direct contact with the thermal conductive resin layer 1300, the heat discharge performance can be maximized.

Meanwhile, in the module-less structure in which the module frame is removed, it is essential to fix the battery cell 110 exposed for structural safety. Therefore, in the battery pack 1000 according to the present embodiment, since each battery cell 110 constituting the battery module 100 is fixed while being in contact with the thermal conductive resin layer 1300, the structural safety can be supplemented..

In addition, the unnecessary cooling structure can be removed, thereby reducing the cost. Further, since the number of parts in the height direction of the battery pack 1000 is reduced, the space utilization rate can be increased, so that the capacity or output of the battery module can be increased.

Although the terms representing directions such as front, rear, left, right, upper and lower directions are used in the present embodiment, these merely represent for convenience of explanation, and may differ depending on a position of an object, a position of an observer, or the like.

The one or more battery modules according to an embodiment of the present disclosure described above may be mounted together with various control and protection systems such as BMS (battery management system) and a cooling system to form a battery pack.

The battery module or the battery pack can be applied to various devices. Such a device can be applied to a vehicle means such as an electric bicycle, an electric vehicle, or a hybrid vehicle, but the present disclosure is not limited thereto, and is applicable to various devices that can use a secondary battery.

Although preferred embodiments of the present disclosure have been described in detail above, the scope of the present disclosure is not limited thereto, and various modifications and improvements made by those skilled in the art are possible if they fall within the scope of the appended claims.

### [Description of Reference Numerals]

100: battery module
200: battery cell stack
410: first sensing block
420: second sensing block
700: elastic member

## Claims

1. A battery module (100) comprising:
a battery cell stack (200) in which a plurality of battery cells (110) including electrode leads (111, 112) are stacked;
a first sensing block (410) and a second sensing block (420) that cover the front surface and the rear surface of the battery cell stack (200) from which the electrode leads (111, 112) protrude; and
an elastic member (700) that covers both side surfaces of the first sensing block (410), the second sensing block (420), and the battery cell stack (200),
wherein each of the first sensing block (410) and the second sensing block (420) includes an outer protrusion part (410a, 420a) that protrudes in a direction opposite to a direction in which the battery cell stack (200) is located,
wherein the elastic member (700) surrounds the outer protrusion parts (410a, 420a) of the first sensing block (410) and the outer protrusion parts (410a, 420a) of the second sensing block (420),
wherein the first sensing block (410) includes first outer protrusion parts (410a) protruding from both ends of the first sensing block (410) in a direction opposite to a direction in which the battery cell stack (200) is located, and the second sensing block (420) includes second outer protrusions parts protruding (420a) from both ends of the second sensing block (420) in a direction opposite to a direction in which the battery cell stack (200) is located,
wherein the elastic member (700) continues while surrounding the first outer protrusion parts (410a) and the second outer protrusion parts (420a),
wherein the elastic member (700) is continuously connected along first sensing block (410), the second sensing block (420), and both side surfaces of the battery cell stack (200), and
wherein the upper surface and the lower surface of the battery cell stack (200) are exposed.

2. The battery module (100) according to claim 1, wherein:
the electrode lead (111, 112) includes a first electrode lead (111) and a second electrode lead (112) that protrude in mutually opposite directions from the battery cell (110).

3. The battery module (100) according to claim 1, wherein:
on the front surface and the rear surface of the battery cell stack (200), at least two of the electrode leads (111, 112) are connected to each other to form an electrode lead joined body (110L).

4. The battery module (100) according to claim 3, wherein:
a low voltage (LV) sensing assembly is located in at least one of the first sensing block (410) and the second sensing block (420), and
the LV sensing assembly (900) is connected to the electrode lead joined body (110L).

5. The battery module (100) according to claim 3, wherein:
a slit (410S) is formed in the first sensing block (410) and the second sensing block (420), and
the electrode leads (111, 112) pass through the slit (410S) and are bent to form the electrode lead joined body (110L).

6. The battery module (100) according to claim 5, wherein:
due to the outer protrusion parts (410a, 420a), the elastic member (700) is spaced apart from the electrode lead joined body (110L).

7. The battery module (100) according to claim 1, further comprising:
a cooling fin (300) located between the battery cells (110),
wherein at least one of the first sensing block (410) and the second sensing block (420) includes an inner protrusion part (410b, 420b) that protrudes in a direction in which the battery cell stack (200) is located, and
the cooling fin (300) makes contact with the inner protrusion part (410b, 420b).

8. The battery module (100) according to claim 7, wherein:
the sum of the protrusion length of the inner protrusion part (410b, 420b) and the length of the cooling fin (300) in contact with the inner protrusion part (410b, 420b) is equal to or greater than the length of the cell body (113) of the battery cell (110).

9. A battery pack (1000) comprising:
the battery module (100) according to claim 1;
a pack frame (1100) that houses the battery module (100); and
a thermal conductive resin layer (1300) that is located between the battery module (100) and the bottom part (1110) of the pack frame (1100),
wherein the elastic member (700) is opened in its lower part, so that the lower surface of the battery cell stack (200) is exposed.

10. The battery pack (1000) according to claim 9, wherein:
the lower surface of the battery cell stack (200) makes contact with the thermal conductive resin layer (1300).

## Patentansprüche

1. Batteriemodul (100) aufweisend:
einen Batteriezellenstapel (200), in dem mehrere Batteriezellen (110), die Elektrodenleitungen (111, 112) aufweisen, gestapelt sind;
einen ersten Erfassungsblock (410) und einen zweiten Erfassungsblock (420), die die Vorderfläche und die Rückfläche des Batteriezellenstapels (200) abdecken, von denen die Elektrodenleitungen (111, 112) vorstehen; und
ein elastisches Element (700), das beide Seitenflächen des ersten Erfassungsblocks (410), des zweiten Erfassungsblocks (420) und des Batteriezellenstapels (200) abdeckt,
wobei sowohl der erste Erfassungsblock (410) als auch der zweite Erfassungsblock (420) einen äußeren vorstehenden Teil (410a, 420a) aufweisen, der in einer Richtung entgegengesetzt zu einer Richtung vorsteht, in der sich der Batteriezellenstapel (200) befindet,
wobei das elastische Element (700) die äußeren vorstehenden Teile (410a, 420a) des ersten Erfassungsblocks (410) und die äußeren vorstehenden Teile (410a, 420a) des zweiten Erfassungsblocks (420) umgibt,
wobei der erste Erfassungsblock (410) erste äußere vorstehende Teile (410a) aufweist, die von beiden Enden des ersten Erfassungsblocks (410) in einer Richtung entgegengesetzt zu einer Richtung vorstehen, in der sich der Batteriezellenstapel (200) befindet, und der zweite Erfassungsblock (420) zweite äußere vorstehende Teile (420a) aufweist, die von beiden Enden des zweiten Erfassungsblocks (420) in einer Richtung entgegengesetzt zu einer Richtung vorstehen, in der sich der Batteriezellenstapel (200) befindet,
wobei sich das elastische Element (700) fortsetzt, während es die ersten äußeren vorstehenden Teile (410a) und die zweiten äußeren vorstehenden Teile (420a) umgibt,
wobei das elastische Element (700) kontinuierlich entlang des ersten Erfassungsblocks (410), des zweiten Erfassungsblocks (420) und beider Seitenflächen des Batteriezellenstapels (200) verbunden ist, und
wobei die obere Fläche und die untere Fläche des Batteriezellenstapels (200) freiliegen.

2. Batteriemodul (100) nach Anspruch 1, wobei:
die Elektrodenleitung (111, 112) eine erste Elektrodenleitung (111) und eine zweite Elektrodenleitung (112) aufweist, die in zueinander entgegengesetzten Richtungen von der Batteriezelle (110) vorstehen.

3. Batteriemodul (100) nach Anspruch 1, wobei:
auf der Vorderfläche und der Rückfläche des Batteriezellenstapels (200) mindestens zwei der Elektrodenleitungen (111, 112) miteinander verbunden sind, um einen Elektrodenleitungsverbindungskörper (110L) zu bilden.

4. Batteriemodul (100) nach Anspruch 3, wobei:
eine Niederspannungs(LV)-Erfassungsanordnung in mindestens einem von dem ersten Erfassungsblock (410) und dem zweiten Erfassungsblock (420) angeordnet ist, und
die LV-Erfassungsanordnung (900) mit dem Elektrodenleitungsverbindungskörper (110L) verbunden ist.

5. Batteriemodul (100) nach Anspruch 3, wobei:
ein Schlitz (410S) in dem ersten Erfassungsblock (410) und dem zweiten Erfassungsblock (420) ausgebildet ist, und
die Elektrodenleitungen (111, 112) durch den Schlitz (410S) verlaufen und gebogen sind, um den Elektrodenleitungsverbindungskörper (110L) zu bilden.

6. Batteriemodul (100) nach Anspruch 5, wobei:
aufgrund der äußeren vorstehenden Teile (410a, 420a) das elastische Element (700) von dem Elektrodenleitungsverbindungskörper (110L) beabstandet ist.

7. Batteriemodul (100) nach Anspruch 1, ferner aufweisend:
eine Kühlrippe (300), die zwischen den Batteriezellen (110) angeordnet ist,
wobei mindestens einer von dem ersten Erfassungsblock (410) und dem zweiten Erfassungsblock (420) einen inneren vorstehenden Teil (410b, 420b) aufweist, der in einer Richtung vorsteht, in der sich der Batteriezellenstapel (200) befindet, und
die Kühlrippe (300) mit dem inneren vorstehenden Teil (410b, 420b) in Kontakt steht.

8. Batteriemodul (100) nach Anspruch 7, wobei:
die Summe der vorstehenden Länge des inneren vorstehenden Teils (410b, 420b) und der Länge der Kühlrippe (300) in Kontakt mit dem inneren vorstehenden Teil (410b, 420b) gleich oder größer als die Länge des Zellenkörpers (113) der Batteriezelle (110) ist.

9. Batteriepack (1000) aufweisend:
das Batteriemodul (100) nach Anspruch 1;
einen Packrahmen (1100), der das Batteriemodul (100) aufnimmt; und
eine wärmeleitfähige Harzschicht (1300), die zwischen dem Batteriemodul (100) und dem Bodenteil (1110) des Packrahmens (1100) angeordnet ist,
wobei das elastische Element (700) in seinem unteren Teil geöffnet ist, so dass die untere Fläche des Batteriezellenstapels (200) freiliegt.

10. Batteriepack (1000) nach Anspruch 9, wobei:
die untere Fläche des Batteriezellenstapels (200) mit der wärmeleitfähigen Harzschicht (1300) in Kontakt steht.

## Revendications

1. Module de batterie (100), comportant :
un empilement d'éléments de batterie (200) dans lequel les éléments d'une pluralité d'éléments de batterie (110) comprenant des fils d'électrode (111, 112) sont empilés ;
un premier bloc de détection (410) et un deuxième bloc de détection (420) qui recouvrent la surface avant et la surface arrière de l'empilement d'éléments de batterie (200) à partir duquel les fils d'électrode (111, 112) font saillie ; et
un élément élastique (700) qui recouvre les deux surfaces latérales du premier bloc de détection (410), du deuxième bloc de détection (420) et de l'empilement d'éléments de batterie (200),
dans lequel chacun parmi le premier bloc de détection (410) et le deuxième bloc de détection (420) comprend une partie saillante extérieure (410a, 420a) qui fait saillie dans une direction opposée à une direction dans laquelle se trouve l'empilement d'éléments de batterie (200),
dans lequel l'élément élastique (700) entoure les parties saillantes extérieures (410a, 420a) du premier bloc de détection (410) et les parties saillantes extérieures (410a, 420a) du deuxième bloc de détection (420),
dans lequel le premier bloc de détection (410) comprend des premières parties saillantes extérieures (410a) faisant saillie à partir des deux extrémités du premier bloc de détection (410) dans une direction opposée à une direction dans laquelle se trouve l'empilement d'éléments de batterie (200), et le deuxième bloc de détection (420) comprend des deuxièmes parties saillantes extérieures (420a) faisant saillie à partir des deux extrémités du deuxième bloc de détection (420) dans une direction opposée à une direction dans laquelle se trouve l'empilement d'éléments de batterie (200),
dans lequel l'élément élastique (700) continue tout en entourant les premières parties saillantes extérieures (410a) et les deuxièmes parties saillantes extérieures (420a),
dans lequel l'élément élastique (700) est connecté en continu le long du premier bloc de détection (410), du deuxième bloc de détection (420) et des deux surfaces latérales de l'empilement d'éléments de batterie (200), et
dans lequel la surface supérieure et la surface inférieure de l'empilement d'éléments de batterie (200) sont exposées.

2. Module de batterie (100) selon la revendication 1, dans lequel :
le fil d'électrode (111, 112) comprend un premier fil d'électrode (111) et un deuxième fil d'électrode (112) qui font saillie dans des directions mutuellement opposées à partir de l'élément de batterie (110).

3. Module de batterie (100) selon la revendication 1, dans lequel :
sur la surface avant et la surface arrière de l'empilement d'éléments de batterie (200), au moins deux des fils d'électrode (111, 112) sont connectés l'un à l'autre pour former un corps à fils d'électrodes reliés (110L).

4. Module de batterie (100) selon la revendication 3, dans lequel :
un ensemble de détection de basse tension (LV) est situé dans au moins l'un parmi le premier bloc de détection (410) et le deuxième bloc de détection (420), et
l'ensemble de détection LV (900) est connecté au corps à fils d'électrodes reliés (110L).

5. Module de batterie (100) selon la revendication 3, dans lequel :
une fente (410S) est formée dans le premier bloc de détection (410) et le deuxième bloc de détection (420), et
les fils d'électrode (111, 112) passent au travers de la fente (410S) et sont courbés pour former le corps à fils d'électrodes reliés (110L).

6. Module de batterie (100) selon la revendication 5, dans lequel :
du fait des parties saillantes extérieures (410a, 420a), l'élément élastique (700) est espacé du corps à fils d'électrodes reliés (110L).

7. Module de batterie (100) selon la revendication 1, comportant par ailleurs :
une ailette de refroidissement (300) située entre les éléments de batterie (110),
dans lequel au moins l'un parmi le premier bloc de détection (410) et le deuxième bloc de détection (420) comprend une partie saillante intérieure (410b, 420b) qui fait saillie dans une direction dans laquelle se trouve l'empilement d'éléments de batterie (200), et
l'ailette de refroidissement (300) entre en contact avec la partie saillante intérieure (410b, 420b).

8. Module de batterie (100) selon la revendication 7, dans lequel :
la somme de la longueur de la saillie de la partie saillante intérieure (410b, 420b) et de la longueur de l'ailette de refroidissement (300) en contact avec la partie saillante intérieure (410b, 420b) est égale ou supérieure à la longueur du corps d'élément (113) de l'élément de batterie (110).

9. Bloc de batterie (1000), comportant :
le module de batterie (100) selon la revendication 1 ;
un cadre de bloc (1100) qui loge le module de batterie (100) ; et
une couche de résine thermoconductrice (1300) qui est située entre le module de batterie (100) et la partie inférieure (1110) du cadre de bloc (1100),
dans lequel l'élément élastique (700) est ouvert dans sa partie inférieure, de telle sorte que la surface inférieure de l'empilement d'éléments de batterie (200) est exposée.

10. Bloc de batterie (1000) selon la revendication 9, dans lequel :
la surface inférieure de l'empilement d'éléments de batterie (200) entre en contact avec la couche de résine thermoconductrice (1300).
